# EUROPÄISCHE PATENTSCHRIFT

(11) **EP 3 449 720 B1**
(45) Veröffentlichungstag und Bekanntmachung des Hinweises auf die Patenterteilung: **10.06.2020**
(21) Anmeldenummer: 18187445.4
(22) Anmeldetag: 06.08.2018
(51) Int. Cl.: A01K 29/00, A22B 3/00, A01K 63/00, A23B 4/06, A01K 61/85

(54) **VORRICHTUNG ZUM AUFBEREITEN VON TIERNAHRUNG FÜR KARNIVOREN**
DEVICE FOR THE TREATMENT OF PET FOOD FOR CARNIVORES
DISPOSITIF DE PRÉPARATION D'ALIMENTS POUR CARNIVORES

(30) Priorität: 29.08.2017 DE 102017008149
(43) Veröffentlichungstag der Anmeldung: 06.03.2019
(73) Patentinhaber: Messer Group GmbH, 65812 Bad Soden (DE); Messer Tatragas spol. s. r.o., 81944 Bratislava (SK)
(72) Erfinder: Gockel, Frank, 42553 Velbert (DE); Olexová, Dorota, 911 01 Trencín (SK)
(74) Vertreter: Münzel, Joachim R.

(56) Entgegenhaltungen:
- US-A1- 2008 254 727
- US-A1- 2010 218 539
- US-A1- 2014 230 743
- US-B2- 9 572 367

## Beschreibung

Die Erfindung betrifft eine Vorrichtung zum Aufbereiten von Tiernahrung für Karnivoren.

Zur Versorgung karnivorer Tiere in Tierparks, Zoologischen Gärten, Tierheimen u. dergl. mit geeigneter Nahrung aus Fleisch- oder Fischprodukten wird diese - auch aus ökonomischen Gründen - oft in größeren Mengen angekauft und anschließend vor Ort über längere Zeiträume im tiefgefrorenen Zustand gelagert, bevor es nach und nach verfüttert wird. Bei der Lieferung von frischem Fleisch oder Fisch ist dabei darauf zu achten, dass die gelieferte Nahrung möglichst rasch eingefroren wird, um eine hinreichende Qualität sicherzustellen und das Auftreten bzw. die Vermehrung von Bakterien zu vermeiden. Das Einfrieren der Tiernahrung erfolgt beispielsweise in leistungsfähigen Kühlräumen.

Eine weitere Nahrungsquelle für bestimmte Karnivoren, beispielsweise bestimmte Schlangenarten, sind Nagetiere, wie Mäuse und Ratten, die in artgerechter Haltung gezüchtet und den Karnivoren möglichst frisch zugeführt werden. Da in Europa lebende Wirbeltiere nicht oder nur in Ausnahmefällen verfüttert werden dürfen, müssen die zum Verfüttern vorgesehene Tiere vor ihrer Zuführung an die Karnivoren getötet werden, wobei die Tötung unter möglichst weitgehender Vermeidung von Schmerzen oder Leiden durchzuführen ist. Als tierschutzgerechte Methoden werden dabei insbesondere Verfahren angesehen, die mit einer schnell einsetzenden und ausreichend tiefen Betäubung beginnen und mit absoluter Sicherheit zum Tod, d.h. zum endgültigen irreversiblen Erlöschen der Lebensfunktionen, insbesondere der Hirnfunktion, führen. Allerdings scheiden beim Töten von Futtertieren alle Methoden aus, die Rückstände im Fleisch des Futtertieres hinterlassen, also insbesondere die Verwendung von Inhalationsnarkotika, da sich diese im Fettgewebe anreichern können.

Als eine tierschutzgerechte Tötungsmethode wird die Begasung mit Kohlendioxid angesehen. Das Einatmen von hochkonzentriertem CO₂ verursacht innerhalb weniger Sekunden Bewusstlosigkeit, die bei einer Verlängerung der Einwirkungszeit um einige Minuten zum Tode führt. Zur tierschutzgerechten Durchführung müssen folgende Punkte erfüllt werden:
- Die Tötungskammer muss so beschaffen sein, dass innerhalb weniger Sekunden eine wirksame Gaskonzentration erreicht werden kann
- Jedem Tier muss ausreichend Bodenfläche zu Verfügung stehen
- Die Tiere sind ausreichend lange in der Kammer zu belassen
- Nach dem Herausnehmen ist zu überprüfen, ob die Tiere wirklich tot sind.

Druckschriften US2014/230743A1 und US2010/218539A1 offenbaren Vorrichtungen zum Töten von Tieren in einer Tötungskammer.

Aufgabe der vorliegenden Erfindung ist es, eine Anordnung zum Aufbereiten von Tiernahrung für Karnivoren anzugeben, die sowohl für das Einfrieren frisch angelieferter Fleisch- und Fischprodukte, als auch für die Bereitstellung frisch getöteter Futtertiere unter Wahrung einer tierschutzgerechten Tötung geeignet ist.

Gelöst ist diese Aufgabe durch eine Vorrichtung mit den Merkmalen des Patentanspruchs 1. Vorteilhafte Ausgestaltungen der Erfindung sind in den Unteransprüchen angegeben.

Eine erfindungsgemäße Vorrichtung zum Aufbereiten von Tiernahrung für Karnivorer weist also eine mit thermisch isolierten Wänden ausgestattete Behandlungskammer auf. Die Behandlungskammer weist eine Zugangsöffnung auf, die beispielsweise mittels einer Türe gasdicht verschließbar ist. In die Behandlungskammer mündet eine mit einer Quelle für gasförmiges Kohlendioxid strömungsverbundene Gaszuleitung und eine mit einer Quelle für flüssiges Kohlendioxid strömungsverbundene Flüssigzuleitung ein sowie eine Abzugsleitung zum Abführen von Gas aus der Behandlungskammer aus. Dabei sind die Gaszuleitung und die Flüssigzuleitung mit einer Ventilanordnung zum wahlweisen strömungstechnischen Abtrennen und Herstellen der Strömungsverbindung mit der Behandlungskammer ausgerüstet.

Die Behandlungskammer der erfindungsgemäßen Vorrichtung wird also wahlweise als Kühlaggregat zum schnellen Einfrieren von als Tiernahrung bestimmten Frischprodukten aus Fleisch oder Fisch genutzt, wie auch als Vergasungskammer zum Töten von Tieren, die zum anschließenden Verfüttern bestimmt sind. Es ist also nicht mehr erforderlich, getrennte Einrichtungen für das Gefrieren frisch angelieferter Fleisch- oder Fischprodukte und das Vergasen lebender Futtertiere vorzusehen.

Der Wechsel zwischen den Betriebsarten "Gefrieren von Fleisch- oder Fischprodukten" und "Töten von Futtertieren" ist in wenigen Handgriffen vollzogen. Sowohl für den Gefriervorgang als auch zur Euthanasie der Futtertiere kommt Kohlendioxid zum Einsatz, das bevorzugt der gleichen Quelle, beispielsweise einem mit flüssigem Kohlendioxid gefüllten Drucktank, entnommen wird.

Zum Gefrieren der Fleisch- und Fischprodukte wird Kohlendioxid im flüssigen Zustand unter einem Druck von beispielsweise 18 bis 20 bar herangeführt und vor oder während der Einleitung in die Behandlungskammer entspannt. Dabei entsteht Kohlendioxidschnee und Kohlendioxidgas mit einer Temperatur von ca. -78,9°C (bei 1 bar Umgebungsdruck). In einer derart stark gekühlten Atmosphäre können auch großvolumige Fleisch- und Fischprodukte rasch eingefroren werden, wodurch die Gefahr eines Befalls mit Bakterien minimiert wird. Beispielsweise wird frisches Fleisch oder Fisch, das mit einer Temperatur von etwa 4°C angeliefert wurde, in der Behandlungskammer auf eine Temperatur von -10°C oder darunter abgekühlt und anschließend in Kühlhäusern bei Tiefgefriertemperatur (-18°C) gelagert. Der hohe Kälteinhalt des bei der Entspannung entstehenden kalten Kohlendioxidgases ermöglicht beispielsweise bei Fleisch eine schnelle mittlere Gefriergeschwindigkeit von 5 cm/h und mehr, also dem Zehnfachen der mittleren Gefriergeschwindigkeit handelsüblicher Kühltruhen von ca. 0,5 cm/h.

Für das von Zeit zu Zeit erforderliche Töten von Futtertieren wird dagegen Kohlendioxidgas verwendet, dessen Temperatur im wesentlichen der Umgebungstemperatur entspricht und dessen Zuführung nicht zu einem Kälteschock und einem damit einhergehenden Stresszustand bei den behandelten Tieren führt. Die Zuführung des Gases in die Behandlungskammer zielt darauf ab, zumindest in dem Bereich, in dem sich zu tötende Tiere aufhalten, eine Atmosphäre auszubilden, die zumindest aus 90 Vol.-% Kohlendioxid besteht. Um das Leiden der Tiere möglichst gering zu halten, ist die Gaszuleitung und die darin angeordneten Armaturen bevorzugt so ausgelegt, dass das Kohlendioxid in einem Mengenstrom von zumindest 30% des Volumens der Behandlungskammer pro Minute zugeführt werden kann. Durch in der Abzugsleitung installierte Absaugeinrichtungen oder Ventilationssysteme kann die Herstellung einer letalen kohlendioxidreichen Atmosphäre weiter beschleunigt werden.

Im Übrigen können beide Betriebsarten miteinander kombiniert werden. So können Futtertiere zunächst nach dem zuvor beschriebenen Verfahren getötet und anschließend noch in der Behandlungskammer durch Zufuhr von flüssigem Kohlendioxid eingefroren werden.

Eine besonders vorteilhafte Ausgestaltung der Erfindung sieht vor, dass die Gaszuleitung an ihrem in die Behandlungskammer einmündenden Ende mit einem Diffusor ausgerüstet ist. Bei der Begasung der Futtertiere erfolgt die Zuführung des Gases also sehr gleichmäßig und ohne Ausbildung turbulenter Strömungen, die zu einer Vermischung des zugeführten Kohlendioxids mit noch in der Behandlungskammer vorhandener sauerstoffhaltiger Atmosphäre führen könnten. Auf diese Weise wird gewährleistet, dass der Kohlendioxidgehalt des Gases auch zu Beginn der Behandlung hinreichend hoch ist, um die Futtertiere rasch, in der Regel innerhalb weniger Sekunden, in Bewusstlosigkeit fallen zu lassen.

Um die rasche Ausbildung einer Atmosphäre mit hohem Kohlendioxidgehalt zumindest im unteren Bereich der Behandlungskammer, in dem sich üblicherweise die zu tötenden Tiere aufhalten, zu begünstigen sieht eine bevorzugte Ausgestaltung der Erfindung vor, dass die Gaszuleitung in einem unteren Bereich der Behandlungskammer ausmündet.

In einer vorteilhaften Ausgestaltung der Erfindung ist der Gaszuleitung eine Einheit zur Regelung des Gasdurchflusses zugeordnet. Die Einheit zur Regelung des Gasdurchflusses steht dabei bevorzugt mit einer Analyseeinrichtung zur Messung der Zusammensetzung des Abgases in der Abzugsleitung in Wirkverbindung. Die Zufuhr des Kohlendioxidgases kann so laufend in Abhängigkeit von gemessenen Parametern und/oder nach einem vorgegebenen Programm geregelt werden. Alternativ oder ergänzend dazu steht die Einheit zur Regelung des Gasdurchflusses zweckmäßigerweise mit einem Zeitgeber in Wirkverbindung. Der Zeitgeber ermöglicht die Zuführung des Kohlendioxids in einem geregelten Mengenstrom während einer durch den Zeitgeber bestimmten Dauer, ohne dass es hierzu des Eingriffs einer Bedienperson bedarf.

Bevorzugt dient als Quelle sowohl für flüssiges Kohlendioxid als auch für gasförmiges Kohlendioxid ein Drucktank, in dem Kohlendioxid sowohl in einer flüssigen Phase als auch in einer Gasphase vorliegt. Beispielsweise kommt ein Drucktank zum Einsatz, in welchem das Kohlendioxid bei einem Druck von 15 bis 20 bar bevorratet wird. Die Gaszuleitung ist dabei mit der im Drucktank vorliegenden Gasphase und die Flüssigzuleitung mit der flüssigen Phase strömungsverbunden. Der gleiche Tank dient also zur Versorgung der erfindungsgemäßen Vorrichtung in beiden Betriebszuständen.

Anhand der Zeichnungen sollen Ausführungsbeispiele der Erfindung näher erläutert werden. In schematischen Ansichten zeigen:
- Fig. 1:: Eine erfindungsgemäße Vorrichtung in einer ersten Ausführungsform,
- Fig. 2:: eine erfindungsgemäße Vorrichtung in einer anderen Ausführungsform.

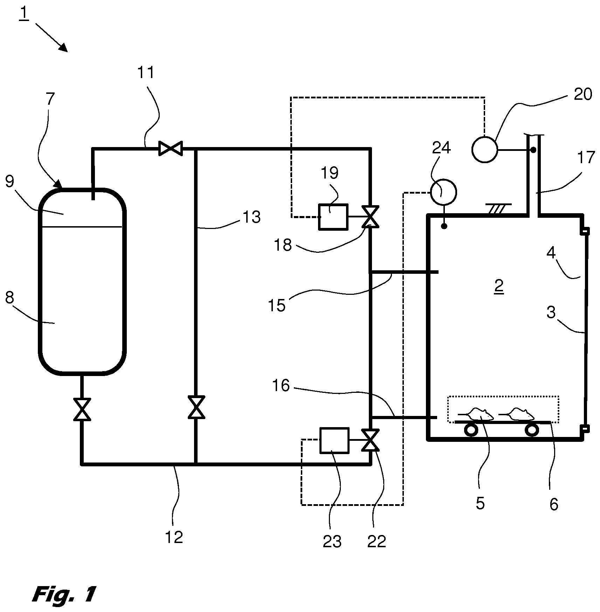

Die in Fig. 1 gezeigte Vorrichtung 1 umfasst eine gasdichte und thermisch isolierte Behandlungskammer 2. Die Behandlungskammer 2 ist mit einer seitlichen Zugangsöffnung 4 ausgerüstet, die die mittels einer Tür 3 gasdicht verschlossen werden kann. Durch die Tür 3 werden die die zu gefrierenden Produkte bzw. die zu tötenden Futtertiere 5 in geeigneten Behältern, insbesondere Körben oder Käfigen 6 eingebracht.

Die Vorrichtung 1 umfasst des weiteren einen Tank 7, in dem Kohlendioxid unter einem Druck von beispielsweise 15 bis 20 bar bevorratet wird. Im Tank 7 ist das Kohlendioxid in einer flüssigen Phase 8 und einer Gasphase 9 anwesend. Aus dem Tank 7 im Bereich der Gasphase 9 ausmündend führt eine Gaszuleitung 11 vom Tank 7 zur Behandlungskammer 2. Zugleich führt eine mit der flüssigen Phase 8 strömungsverbundene Zuleitung 12 vom Tank 7 zur Behandlungskammer 2. Gaszuleitung 11 und Zuleitung 12 sind über eine Ausgleichsleitung 13 miteinander strömungsverbunden. Sowohl die Gaszuleitung 11 als auch die Zuleitung 12 münden bei der Vorrichtung 1 in gemeinsamen, vertikal voneinander beabstandeten Zuführungen 15, 16 in die Behandlungskammer 2 ein. Die Zuführungen 15, 16 dienen dazu, dem Innenraum der Behandlungskammer 2 möglichst schnell Kohlendioxid zuzuführen. Die dabei verdrängte Innenatmosphäre wird aus der Behandlungskammer 2 über eine Abzugsleitung 17 abgeführt, in der (hier nicht gezeigt) eine Absaugeinrichtung vorgesehen sein kann. Im Rahmen der Erfindung können im Übrigen auch mehr als zwei Zuführungen 15, 16 vorhanden sein, die vertikal und/oder horizontal voneinander beabstandet sein können, oder aber auch nur eine einzige Zuführung.

Über ein Regelventil 18, das über eine Steuereinheit 19 mit einer Analyseeinheit 20 in Datenverbindung steht, wird die Zufuhr von Gas durch die Gaszuleitung 11 zu den Zuführungen 15, 16, und damit in den Innenraum der Behandlungskammer 2 hinein, gesteuert und kann dabei auch völlig unterbrochen werden. Die Regelung der Gaszufuhr erfolgt in Abhängigkeit von in der Analyseeinheit 20 gewonnenen Messwerten, insbesondere dem Kohlendioxidgehalt des durch den Abzug 17 geführten Gases.

Ein in der Zuleitung 12 angeordnetes Regelventil 22 steht über eine Steuereinheit 23 mit einer Messstelle 24 in Datenverbindung. Mittels der Messstelle 24 wird insbesondere die Temperatur in der Behandlungskammer 2 erfasst. Abhängig von der erfassten Temperatur kann die die Zufuhr von flüssigem Kohlendioxid über die Zuleitung 12 an die Zuführungen 15, 16 geregelt und dabei auch ganz eingestellt werden.

Die Vorrichtung 1 kann in zwei Betriebsarten gefahren werden. In der Betriebsart "Gefrieren von Produkten", bei dem es um das Einfrieren von insbesondere aus Fleisch- oder Fischbestandteilen bestehender Tiernahrung geht, ist das Regelventil 18 stets geschlossen. Die einzufrierenden Produkte werden in geeigneten Behältern, wie z.B. Körben, durch die Zugangsöffnung 4 in die Behandlungskammer 2 eingebracht. Die Zugangsöffnung 4 wird anschließend mit der Tür 3 verschlossen. Über die Zuleitung 12 und die Zuführungen 15, 16 wird flüssiges Kohlendioxid mit dem im Tank 7 herrschenden Druck in die Behandlungskammer 2 eingeleitet. Beim Eintritt in die Behandlungskammer 2 entspannt sich das Kohlendioxid auf den dort vorliegenden Druck von etwa 1 bar und geht in ein Gemisch aus Kohlendioxidschnee und kaltem Kohlendioxidgas über. Auf diese Weise wird die Temperatur in der Behandlungskammer 2 rasch auf einen vorgegebenen Wert unterhalb von 0°C gesenkt, beispielsweise auf einen Wert von unter -10°C bis -18°C. Der hohe Kälteinhalt des kalten Kohlendioxidgases ermöglicht eine hohe Gefriergeschwindigkeit der Fleisch- und Fischprodukte von 5 cm/h und mehr. Nach dem Einfrieren der Produkte wird die Zufuhr von Kohlendioxid über die Zuleitung 12 eingestellt, und die Produkte werden aus der Behandlungskammer 2 entnommen und beispielsweise hier nicht gezeigten Kühlhäusern zugeführt. Es ist im Übrigen im Rahmen der Erfindung nicht zwingend erforderlich, dass das flüssige Kohlendioxid erst beim Eintreten in die Behandlungskammer entspannt wird, es ist vielmehr auch möglich, die Entspannung des flüssigen Kohlendioxids bereits vor dessen Zuführung an die Behandlungskammer 2 durchzuführen und in die Behandlungskammer 2 das dabei erzeugte kalte Kohlendioxidgas einzuleiten.

Auch wenn die Vorrichtung 1 in dieser Betriebsart für das Einfrieren von Fleisch- oder Fischprodukten konzipiert ist, ist es im Übrigen natürlich auch möglich, die Vorrichtung 1 zum Einfrieren von Tiernahrung pflanzlichen Ursprungs einzusetzen.

In der Betriebsart "Töten von Futtertieren", bei dem es um das Töten lebender, als Tiernahrung vorgesehener Futtertiere 5, wie beispielsweise Mäuse oder Ratten, geht, ist das Regelventil 22 stets geschlossen. Die Temperatur der Atmosphäre im Innern der Behandlungskammer 2 unterscheidet sich nicht wesentlich von der Umgebungstemperatur. Die zu tötenden Futtertiere 5 werden in geeigneten Behältern unter Wahrung aller tierschutzrechtlicher Vorschriften durch die Zugangsöffnung 4 in die Behandlungskammer 2 eingebracht, woraufhin sich die Futtertiere 4 im unteren Bereich der Behandlungskammer 2 befinden. Beispielsweise werden die Futtertiere 5 in gasdurchlässigen Körben 6 eingebracht, die jeweils eine Bewegungsfläche von ca. 200 - 250 cm² pro Maus und 400 - 500 cm² pro Ratte ermöglichen. Die Zugangsöffnung 4 wird anschließend mittels der Tür 3 gasdicht verschlossen. Über die Gaszuleitung 11 wird Kohlendioxid in die Behandlungskammer 2 eingebracht, wobei der Mengenstrom zumindest 30% des Volumens der Behandlungskammer 2 pro Minute betragen sollte. Aufgrund seiner höheren Dichte sammelt sich das Kohlendioxid im Bodenbereich der Behandlungskammer 2, während die sauerstoffreichere Ursprungsatmosphäre über den Abzug 17 herausgedrängt oder mittels einer hier nicht gezeigten Absaugeinrichtung abgesaugt wird. Dabei wird zumindest in dem Bereich, in dem sich innerhalb der Behandlungskammer 2 Futtertiere 5 aufhalten, möglichst rasch eine Atmosphäre hergestellt, die zumindest aus 90 Vol.-% aus Kohlendioxid besteht. Der hohe Kohlendioxidgehalt der sich in der Behandlungskammer 2 ausbildenden Atmosphäre sorgt dafür, dass die Futtertiere 5 innerhalb weniger Sekunden in Bewusstlosigkeit fallen und innerhalb eines Zeitraums von etwa fünf bis sieben Minuten sterben. Der Mengenstrom des über die Gaszuleitung 11 zugeführten Kohlendioxids wird dabei laufend nach einem vorgegebenen Programm in Abhängigkeit von der im Abgas gemessenen Kohlendioxidkonzentration geregelt, um einerseits einen letalen Kohlendioxidanteil der Atmosphäre in der Behandlungskammer sicherzustellen und andererseits den Verbrauch von Kohlendioxid zu minimieren.

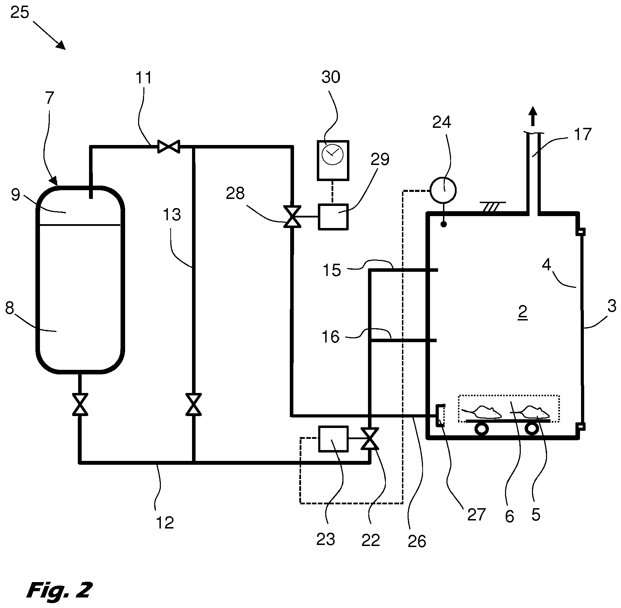

Die in Fig. 2 gezeigte Vorrichtung 25 unterscheidet sich von der Vorrichtung 1 aus Fig. 1 lediglich durch ein anderes Zuführsystem für gasförmiges und flüssiges Kohlendioxid. Im Übrigen sind gleich wirkende Komponenten mit den gleichen Bezugsziffern versehen wie bei der Vorrichtung 1; ebenso sind die bestimmungsgemäßen Betriebsarten der Vorrichtung 25 die gleichen wir die der Vorrichtung 1.

Im Unterschied zur Vorrichtung 1 sind bei der Vorrichtung 25 die Zuführungen 15, 16 nur mit der Zuleitung 12 für flüssiges Kohlendioxid verbunden. Die Gaszuleitung 11 mündet dagegen über eine Zuführung 26 in den Bodenbereich der Behandlungskammer 2 ein. Die Zuführungen 15, 16 sind also ausschließlich für flüssiges Kohlendioxid, die Zuführung 26 ausschließlich für Kohlendioxidgas bestimmt. Die Zuführung 26 ist an ihrer Ausmündung in die Behandlungskammer 2 mit einem Diffusor 27 ausgerüstet, der eine möglichst gleichmäßige und turbulenzarme Ausbildung einer kohlendioxidreichen Atmosphäre in der Behandlungskammer 2 begünstigt.

Die Betriebsart "Gefrieren von Fleisch- oder Fischprodukten" wird in der Vorrichtung 25 in gleicher Weise wie in der Vorrichtung 1 durchgeführt. In der Betriebsart "Töten von Futtertieren" erfolgt bei diesem Ausführungsbeispiel die Regelung der Kohlendioxidzufuhr an einem Regelventil 28 mittels eines mit einem Zeitgeber 29 verbundenen Steuereinheit 30. Die Regelung erfolgt auf der Grundlage zuvor ermittelter empirischer Werte, und wird durchgeführt, indem der Behandlungskammer 2 vorgegebene Mengenströme an Kohlendioxidgas über vorgegebene Zeitdauern hinweg zugeführt werden. Wesentliches Kriterium für die Regelung ist, dass das zugeführte Kohlendioxidgas möglichst rasch zur Bewusstlosigkeit und anschließend zum Tod der Futtertiere 5 führen soll.

Im Übrigen sind die dargestellten Regelungen nicht auf das jeweilige Ausführungsbeispiel beschränkt. So kann auch bei einer Vorrichtung der in Fig. 1 gezeigten Art die Zufuhr des Kohlendioxidgases mittels eines Zeitgebers geregelt werden, und bei einer Vorrichtung der in Fig. 2 gezeigten Art in Abhängigkeit von einem an einem Sensor gemessenen Konzentrationswert erfolgen.

Vor einer Begehung der Behandlungskammer 2, insbesondere vor einer erneuten Zuführung von Produkten oder Futtertieren, wird die Zufuhr von flüssigem oder gasförmigem Kohlendioxid in die Behandlungskammer 2 eingestellt und die Behandlungskammer 2 gründlich durchlüftet. Insbesondere bei einer Installation der Vorrichtung 1, 25 in geschlossenen Räumen kann dazu eine - hier nicht gezeigte - maschinelle Einrichtung vorgesehen sein, mittels der in die Behandlungskammer 2 vor deren Öffnung Luft zugeführt werden kann.

### Bezugszeichenliste:

- 1: Vorrichtung
- 2: Behandlungskammer
- 3: Tür
- 4: Zugangsöffnung
- 5: Futtertier
- 6: Käfig
- 7: Tank
- 8: Flüssige Phase
- 9: Gasphase
- 10: -
- 11: Gaszuleitung
- 12: Zuleitung
- 13: Ausgleichsleitung
- 14: -
- 15: Zuführung
- 16: Zuführung
- 17: Abzug
- 18: Regelventil
- 19: Steuereinheit
- 20: Analyseeinheit
- 21: -
- 22: Regelventil
- 23: Steuereinheit
- 24: Messstelle
- 25: Vorrichtung
- 26: Zuführung
- 27: Diffusor
- 28: Regelventil
- 29: Zeitgeber
- 30: Regelventil

## Patentansprüche

1. Vorrichtung zum schnellen Einfrieren von Frischprodukten aus Fleisch oder Fisch und zum Töten von Tieren, die als Tiernahrung für Karnivoren bestimmt sind, mit einer mit thermisch isolierten Wänden sowie mit einer gasdicht verschließbaren Zugangsöffnung (4) ausgerüsteten Behandlungskammer (2), in die eine mit einer Quelle (7) für gasförmiges Kohlendioxid strömungsverbundene Gaszuleitung (11) (12) einmündet sowie eine Abzugsleitung (17) zum Abführen von Gas aus der Behandlungskammer (2) ausmündet,
**dadurch gekennzeichnet,**
**dass** in die Behandlungskammer (2) eine mit einer Quelle (7) für flüssiges Kohlendioxid strömungsverbundene Flüssigzuleitung (12) einmündet, wobei die Gaszuleitung (11) und die Flüssigzuleitung (12) mit einer Ventilanordnung (28, 22, 29) zum wahlweisen strömungstechnischen Abtrennen und Herstellen einer Strömungsverbindung mit der Behandlungskammer (2) ausgerüstet sind, und als gemeinsame Quelle für flüssiges Kohlendioxid und für gasförmiges Kohlendioxid ein Drucktank (7) vorgesehen ist, wobei die Gaszuleitung (11) mit einer im Drucktank (7) vorliegenden Gasphase (9) und die Flüssigzuleitung (12) mit einer im Drucktank (7) vorliegenden flüssigen Phase (8) strömungsverbunden ist.

2. Vorrichtung nach Anspruch 1, **dadurch gekennzeichnet, dass** die Gaszuleitung (11) an ihrem in die Behandlungskammer (2) einmündenden Ende mit einem Diffusor (27) ausgerüstet ist.

3. Vorrichtung nach Anspruch 1 oder 2, dass die Gaszuleitung (11) in einem unteren Bereich der Behandlungskammer (2) ausmündet.

4. Vorrichtung nach einem der vorhergehenden Ansprüche, **dadurch gekennzeichnet,**
**dass** die Gaszuleitung (11) mit einer Einheit (19, 29) zur Regelung des Gasdurchflusses ausgerüstet ist.

5. Vorrichtung nach einem der vorhergehenden Ansprüche, **dadurch gekennzeichnet,**
**dass** die Einheit (19, 29) zur Regelung des Gasdurchflusses die mit einer Analyseeinrichtung (20) zur Messung der Zusammensetzung des Abgases in der Abzugsleitung (17) in Wirkverbindung steht.

6. Vorrichtung nach einem der vorhergehenden Ansprüche, **dadurch gekennzeichnet,**
**dass** die Einheit (19, 29) zur Regelung des Gasdurchflusses mit einem Zeitgeber (30) in Wirkverbindung steht.

## Claims

1. Device for quickly freezing fresh products of meat or fish and for killing animals intended as animal food for carnivores, with a treatment chamber (2) which is equipped with thermally insulated walls and with a gas-tightly closable access opening (4), has entering it a gas supply line (11) (12) flow-connected to a source (7) for gaseous carbon dioxide and has leaving it an extraction line (17) for removing gas from the treatment chamber (2),
**characterized**
**in that** the treatment chamber (2) has entering it a liquid supply line (12) flow-connected to a source (7) for liquid carbon dioxide, wherein the gas supply line (11) and the liquid supply line (12) are equipped with a valve arrangement (28, 22, 29) for optionally stopping the flow and establishing the flow of a flow connection to the treatment chamber (2), and a pressure tank (7) is provided as a common source for liquid carbon dioxide and for gaseous carbon dioxide, wherein the gas supply line (11) is flow-connected to a gas phase (9) present in the pressure tank (7) and the liquid supply line (12) is flow-connected to a liquid phase (8) present in the pressure tank (7).

2. Device according to Claim 1, **characterized in that** the gas supply line (11) is equipped with a diffuser (27) at its end entering the treatment chamber (2).

3. Device according to Claim 1 or 2, that the gas supply line (11) leaves in a lower region of the treatment chamber (2).

4. Device according to one of the preceding claims,
**characterized in that** the gas supply line (11) is equipped with a unit (19, 29) for controlling the gas flow.

5. Device according to one of the preceding claims,
**characterized in that** the unit (19, 29) for controlling the gas flow the is in operative connection with an analysing device (20) for measuring the composition of the waste gas in the extraction line (17).

6. Device according to one of the preceding claims,
**characterized in that** the unit (19, 29) for controlling the gas flow is in operative connection with a timer (30).

## Revendications

1. Dispositif pour la congélation rapide de produits frais constitués de viande ou de poisson et pour l'abattage d'animaux qui sont destinés à nourrir des carnivores, comprenant une chambre de traitement (2) équipée de parois isolées thermiquement et d'une ouverture d'accès (4) pouvant être fermée de manière étanche aux gaz, dans laquelle débouche une conduite d'alimentation en gaz (11) (12) en liaison fluidique avec une source (7) de dioxyde de carbone gazeux et de laquelle débouche une conduite d'évacuation (17) pour évacuer le gaz de la chambre de traitement (2),
**caractérisé en ce**
**qu'**une conduite d'alimentation en liquide (12) en liaison fluidique avec une source (7) de dioxyde de carbone liquide débouche dans la chambre de traitement (2), la conduite d'alimentation en gaz (11) et la conduite d'alimentation en liquide (12) étant équipées d'un agencement de soupape (28, 22, 29) pour couper et établir, par une technique fluidique, de manière sélective, une liaison fluidique avec la chambre de traitement (2), et un réservoir sous pression (7) étant prévu en tant que source commune de dioxyde de carbone liquide et de dioxyde de carbone gazeux, la conduite d'alimentation en gaz (11) étant en liaison fluidique avec une phase gazeuse (9) présente dans le réservoir sous pression (7) et la conduite d'alimentation en liquide (12) étant en liaison fluidique avec une phase liquide (8) présente dans le réservoir sous pression (7).

2. Dispositif selon la revendication 1, **caractérisé en ce que** la conduite d'alimentation en gaz (11) est munie d'un diffuseur (27) au niveau de son extrémité débouchant dans la chambre de traitement (2).

3. Dispositif selon la revendication 1 ou 2, que la conduite d'alimentation en gaz (11) débouche dans une région inférieure de la chambre de traitement (2).

4. Dispositif selon l'une quelconque des revendications précédentes, **caractérisé en ce que** la conduite d'alimentation en gaz (11) est équipée d'une unité (19, 29) pour régler le débit de gaz.

5. Dispositif selon l'une quelconque des revendications précédentes, **caractérisé en ce que** l'unité (19, 29) pour régler le débit de gaz la est en liaison fonctionnelle avec un dispositif d'analyse (20) pour mesurer la composition du gaz évacué dans la conduite d'évacuation (17).

6. Dispositif selon l'une quelconque des revendications précédentes, **caractérisé en ce que** l'unité (19, 29) pour réguler le débit de gaz est en liaison fonctionnelle avec une minuterie (30).
